# EUROPEAN PATENT APPLICATION

(11) **EP 4 542 716 A1**
(43) Date of publication of application: **23.04.2025**
(21) Application number: 23907839.7
(22) Date of filing: 21.12.2023
(51) Int. Cl.: H01M 10/058, H01M 10/44, H01M 10/052, H01M 50/105, H01M 50/129, H01M 10/42

(54) **LITHIUM SECONDARY BATTERY AND MANUFACTURING METHOD THEREFOR**

(30) Priority: 23.12.2022 KR 20220183629
(71) Applicant: LG Energy Solution, Ltd., Seoul 07335 (KR)
(72) Inventor: KIM, Jae Min, Daejeon 34122 (KR); WI, Yeon Hwa, Daejeon 34122 (KR); KIM, Chang Ho, Daejeon 34122 (KR); KIM, Hyun Jin, Daejeon 34122 (KR); KIM, Seon Uk, Daejeon 34122 (KR)
(74) Representative: Plasseraud IP
(86) International application number: PCT/KR2023/021347
(87) International publication number: WO 2024/136556

(57) **Abstract**

The present invention relates to a method for manufacturing a lithium secondary battery and a lithium secondary battery, the method including a first step of manufacturing a battery cell by disposing an electrode assembly in a battery case, and injecting electrolyte, and a second step of performing a pre-cycle for the battery cell at least three times in a voltage range of 2.50 V to 4.35 V.

## Description

### Technical Field

The present invention relates to a lithium secondary battery and a method for manufacturing the same, and more preferably, to a lithium secondary battery having excellent impact-resistance and a method for manufacturing the same.

### BACKGROUND ART

A lithium secondary battery is generally manufactured by a method in which a positive electrode and a negative electrode manufactured by applying an electrode active material slurry on a positive electrode current collector and a negative electrode current collector are stacked on both sides of a separator to form an electrode assembly having a predetermined shape, and then the electrode assembly is accommodated in a battery case and electrolyte is injected into the battery case.

Secondary batteries are classified into a pouch-type and a can-type according to a material of a case accommodating the electrode assembly. Among these, the pouch-type secondary battery is manufactured by a method in which a cup portion is formed by performing a press processing on a flexible pouch film stack, an electrode assembly is accommodated in the cup portion, electrolyte is injected into the cup portion, and a sealing portion is sealed. The can-type secondary battery is manufactured by a method in which an electrode assembly is accommodated in a can made of a metal material, electrolyte is injected into the can, a top cap is assembled, and the can is sealed.

The pouch-type secondary battery has advantages of being light in weight, excellent space utilization, and capable of performing a high energy density by using a stack-type electrode assembly, but has a limitation of being vulnerable to an external impact compared to the can-type secondary battery. Recently, since usage environment of the secondary battery becomes more diverse, there is a demand for excellent safety even in a harsh environment, and accordingly, there is also a demand for improvement of impact-resistance of the lithium secondary battery.

### DISCLOSURE OF THE INVENTION

### TECHNICAL PROBLEM

In order to solve the above limitation, an aspect of the present invention provides a lithium secondary battery in which a frictional force between an inner surface of a battery case and an electrode assembly is increased to at least 21 kgf by performing a pre-cycle process at least 3 times after manufacturing a battery, and a method for manufacturing the same.

### TECHNICAL SOLUTION

According to an aspect of the present invention, there is provided a method for manufacturing a lithium secondary battery, the method including a first step of manufacturing a battery cell by disposing an electrode assembly in a battery case, and injecting electrolyte, and a second step of performing a pre-cycle for the battery cell at least three times in a voltage range of 2.50 V to 4.35 V.

In this case, the battery case may include a barrier layer, a base layer formed on one surface of the barrier layer, and a sealant layer formed on the other surface of the barrier layer, and may be a pouch including at least one cup portion indented in one direction.

In the first step, the electrolyte may be injected such that an amount of the electrolyte per unit capacity of the secondary battery is 2.0 g/Ah to 2.5 g/Ah, and preferably, 2.1 g/Ah to 2.4 g/Ah.

Meanwhile, in the second step, the pre-cycle may be performed at a C-rate of 0.1 C to 1 C, and preferably, 0.1 C to 0.5 C in a SOC region of 0 to 99, and preferably, 0 to 98.5. In addition, a process of activating the battery cell may be additionally performed between the first step and the second step.

According to another aspect of the present invention, there is provided a lithium secondary battery comprising a battery case, and an electrode assembly and electrolyte accommodated in the battery case, wherein a frictional force between the battery case and the electrode assembly is at least 21 kgf, and preferably, 21 kgf to 31 kgf.

In this case, the battery case may include a barrier layer, a base layer formed on one surface of the barrier layer, and a sealant layer formed on the other surface of the barrier layer, and may be a pouch including at least one cup portion indented in one direction, and the electrode assembly and the electrolyte may be accommodated in the cup portion.

Since the lithium secondary battery has an excellent impact-resistance, when a crash shock test is performed under conditions of an acceleration of 133.7 G and a holding time of 15.8 ms, an amount of electrolyte leak of the secondary battery is 0.

### ADVANTAGEOUS EFFECTS

When a pre-cycle process is performed at least three times like a method for manufacturing a lithium secondary battery according to the present invention, the lithium secondary battery has a greater frictional force between an electrode assembly and an inner surface of a battery case (for example, a bottom surface of a cup portion) than that manufactured by a typical method, thereby suppressing separation of the electrode assembly and/or electrolyte leak during an external impact, and remarkably improving impact-resistance of the lithium secondary battery.

A lithium secondary battery manufactured by the method has a high frictional force between the electrode assembly and the inner surface of the battery case of at least 21 kgf, and thus when a crash shock test is performed under conditions of an acceleration of 133.7 G and a holding time of 15.8 ms, the electrolyte leak does not occur by a damage of a pouch.

### BRIEF DESCRIPTION OF THE DRAWINGS

FIG. 1 is a flowchart showing a method for manufacturing a lithium secondary battery according to an embodiment of the present invention.
FIG. 2 is an exploded perspective view of a lithium secondary battery according to an embodiment of the present invention.
FIG. 3 is a diagram illustrating a cross-section of a pouch according to the present invention.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, the present invention will be described in more detail through specific embodiments.

Since a demand for a high-capacity battery such as a battery for an electric vehicle increases recently, a rated capacity of a secondary battery cell is increasing, and accordingly, a weight of an electrode assembly is also increasing. However, due to increase in the weight of the electrode assembly, a phenomenon in which a battery case is damaged by movement of the electrode assembly during an external impact, or the electrode assembly pierces the battery case becomes more severe. When such a damage of the battery case occurs, electrolyte is leaked out, or the electrode assembly is deformed, so that there is a serious limitation in battery performance and safety.

As a result of repeated research to solve the limitation, the inventors have completed the present invention by finding that when a pre-cycle is performed at least 3 times in manufacturing a battery, a frictional force between the electrode assembly and the battery case increases more significantly than that of a battery manufactured in a typical method, thereby suppressing the pouch from being damaged by separation of the electrode assembly during the external impact, and thus having excellent impact-resistance.

Specifically, the method for manufacturing a lithium secondary battery according to the present invention includes a first step of manufacturing a battery cell by disposing an electrode assembly in a battery case, and injecting electrolyte, and a second step of performing a pre-cycle for the battery cell at least 3 times, and preferably, 3 times to 7 times. In this case, the pre-cycle may be performed in a voltage range of 2.50 V to 4.35 V.

When the frictional force between the electrode assembly and an inner surface of the battery case in contact with the electrode assembly increases, the electrode assembly is suppressed from separating during the external impact, and the frictional force between the electrode assembly and the inner surface of the battery case is much affected by an amount of the electrolyte existing on an interface between the electrode assembly and the battery case. As in the present invention, when the pre-cycle is performed at least 3 times, the electrolyte existing between the electrode assembly and the battery case is absorbed into the electrode assembly through a breathing process of the battery so that the amount of the electrolyte of the interface between the electrode assembly and the battery case decreases and thus the frictional force increases. The frictional force may also increase in a case in which the amount of the electrolyte injected into the battery case decreases, but in a case of using such a method, there is a limitation that since an amount of electrolyte usable in the battery cell decreases, life characteristics deteriorates. On the contrary, when the pre-cycle is performed at least 3 times like the present invention, only the amount of the electrolyte of the interface between the electrode assembly and the battery case may decrease without decrease in the amount of the usable electrolyte, so that the limitation of life deterioration does not occur.

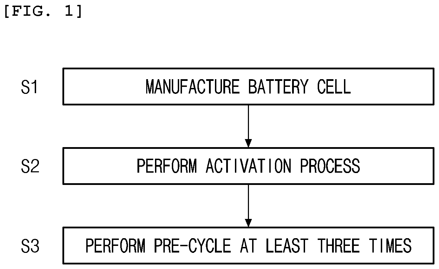

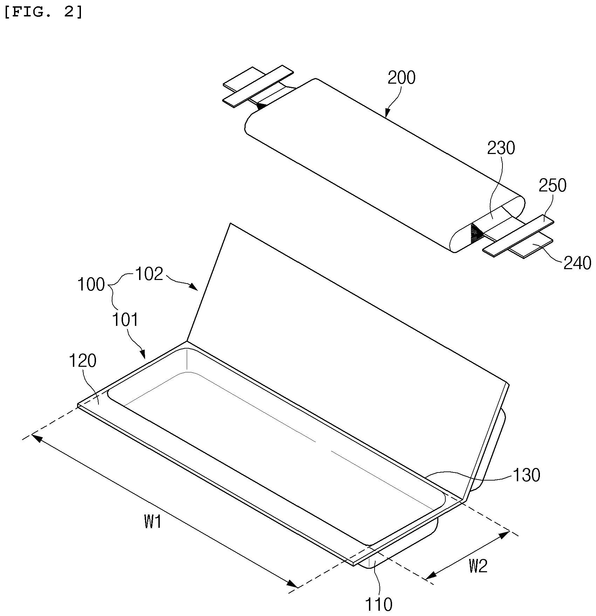

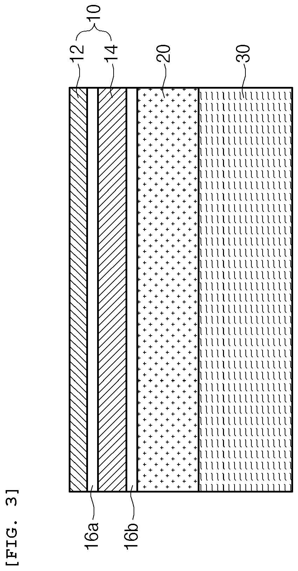

FIG. 1 illustrates a method for manufacturing a lithium secondary battery according to the present invention. In addition, FIG. 2 is a perspective view of a pouch-type lithium secondary battery according to an embodiment of the present invention, and FIG. 3 illustrates a cross-section of a pouch according to the present invention. Hereinafter, the present invention will be described in more detail with reference to FIGS. 1 to 3.

### <Method for manufacturing lithium secondary battery>

Firstly, a method for manufacturing a lithium secondary battery according to the present invention will be described.

### First step: step of manufacturing battery cell

First of all, a battery cell is manufactured by disposing an electrode assembly in a battery case, and injecting electrolyte (S1).

In this case, the battery case may be, for example, a pouch.

Referring to FIGS. 2 and 3, the pouch 100 includes a barrier layer 20, a base layer 10 formed on one surface of the barrier layer 20, and a sealant layer 30 formed on the other surface of the barrier layer 20, and includes at least one cup portion 110 indented in one direction.

Specifically, the pouch 100 may be manufactured by a method of forming a cup portion having an indented shape in the one direction by inserting a flexible pouch film stack, in which the base layer 10, the barrier layer 20, and the sealant layer 30 are sequentially stacked, into a press molding device, and partially pressing the pouch film stack with a punch to elongate.

The base layer 10 is disposed on the outermost layer of the pouch to protect the electrode assembly from an external impact and electrically insulate the electrode assembly.

The base layer 10 may be made of a polymer material, for example, at least one polymer material selected from the group consisting of polyethylene, polypropylene, polycarbonate, polyethyleneterephthalate, polyvinylchloride, acrylic polymer, polyacrylonitrile, polyimide, polyamide, cellulose, aramid, nylon, polyester, polyparaphenylenebenzobisoxazole, polyarylate, and teflon.

The base layer 10 may have a single-layered structure, and as illustrated in FIG. 3, may have a multi-layered structure in which polymer films 12 and 14 different from each other are stacked. When the base layer 10 has the multi-layered structure, an adhesive layer 16a may be disposed between the polymer films.

Meanwhile, the base layer 10 may have the total thickness of 10 µm to 60 µm, preferably, 20 µm to 50 µm, and more preferably, 30 µm to 50 µm. When the base layer 10 may have the multi-layered structure, the thickness is a thickness including the adhesive layer. When the base layer 10 satisfies the ranges, durability, insulation, and moldability are excellent. When the base layer 10 is too thin, durability may decrease and the base layer 10 may be damaged in a molding process, and when the base layer 10 is too thick, moldability may be deteriorated, the total thickness of the pouch may increase, and energy density may decrease due to decrease in a battery accommodation space.

According to an embodiment, the base layer 10 may have a stack structure of a polyethyleneterephthalate (PET) film and a nylon film. In this case, it is preferable that the nylon film is disposed to the barrier layer 20, that is, to the inner side, and the polyethyleneterephthalate film is disposed to the surface of the pouch.

Since the polyethyleneterephthalate (PET) has excellent durability and electric insulation, when the PET film is disposed to the surface of the pouch, durability and insulation are excellent. However, since the PET film has a weak adhesion with and a different elongation behavior from an aluminum alloy thin-film that constitutes the barrier layer 20, when the PET film is disposed to the barrier layer 20, peeling between the base layer 10 and the barrier layer 20 may occur in the molding process, and there may be a limitation that moldability is deteriorated due to a non-uniform elongation of the barrier layer 20. On the contrary, since the nylon film has a similar elongation behavior to the aluminum alloy thin-film that constitutes the barrier layer 20, when the nylon film is disposed between the polyethyleneterephthalate and the barrier layer 20, an effect of improving the moldability may be obtained.

The polyethyleneterephthalate film may have a thickness of 5 µm to 20 µm, preferably, 5 µm to 15 µm, and more preferably, 7 µm to 15 µm, and the nylon film may have a thickness of 10 µm to 40 µm, preferably, 10 µm to 35 µm, and more preferably, 15 µm to 25 µm. When the thickness of the polyethyleneterephthalate film and the thickness of the nylon film respectively satisfy the ranges, moldability and rigidity after molding are excellent.

The barrier layer 20 secures a mechanical strength of the pouch 100, blocking entrance and exit of gas or moisture outside the secondary battery, and prevents electrolyte leak.

The barrier layer 20 may have a thickness of 40 µm to 100 µm, preferably, 50 µm to 80 µm, and more preferably, 60 µm to 80 µm. When the thickness of the barrier layer 20 satisfies the ranges, since occurrence of a crack and/or a pinhole in increasing a cup portion molding depth or forming two cups is reduced due to improved moldability, resistance to an external stress after molding is improved.

Meanwhile, the barrier layer 20 may be made of a metal material, and specifically, an aluminum alloy thin-film.

The aluminum alloy thin-film may include aluminum and at least one or two selected from the group consisting of metal elements except for the aluminum, for example, iron (Fe), copper (Cu), chromium (Cr), manganese (Mn), nickel (Ni), magnesium (Mg), silicon (Si), and zinc (Zn).

Preferably, the aluminum alloy thin-film may have an iron (Fe) content of 1.2% to 1.7% by weight, preferably, 1.3% to 1.7% by weight, and more preferably, 1.3% to 1.45% by weight. When the iron (Fe) content in the aluminum alloy thin-film satisfies the ranges, even when the cup portion is deeply formed, occurrence of the crack or the pinhole may be minimized.

The sealant layer 30 seals the pouch by being adhered through heat pressing, and is disposed in the innermost layer of the pouch film stack.

Since the sealant layer 30 is a surface in contact with the electrolyte and the electrode assembly after molding the pouch, the sealant layer 30 must have insulation and corrosion-resistance, and since the sealant layer 30 must block material transfer between the inside and the outside by completely sealing the inside, the sealant layer 30 must have excellent sealability.

The sealant layer 30 may be made of a polymer material, for example, at least one selected from the group consisting of polyethylene, polypropylene, polycarbonate, polyethyleneterephthalate, polyvinylchloride, acrylic polymer, polyacrylonitrile, polyimide, polyamide, cellulose, aramid, nylon, polyester, polyparaphenylenebenzobisoxazole, polyarylate, and teflon, and it is preferable that the sealant layer 30 includes polypropylene having excellent mechanical properties such as a tensile strength, rigidity, a surface hardness, wear-resistance, and heat-resistance, and an excellent chemical property such as corrosion-resistance.

More specifically, the sealant layer 30 may include polypropylene, cast polypropylene (CPP), acid-modified polypropylene, polypropylene-butylene-ethylene copolymer, or a combination thereof.

The sealant layer 30 may have a single-layered structure, or a multi-layered structure including at least two layers made of different polymer materials.

The sealant layer may have the total thickness of 60 µm to 100 µm, preferably, 60 µm to 90 µm, and more preferably, 70 µm to 90 µm. When the sealant layer has a too small thickness, durability and insulation of sealing may be deteriorated, and when the sealant layer has a too great thickness, flexibility may be deteriorated, and an energy density relative to a volume may be deteriorated due to increase in the total thickness of the pouch film stack.

Meanwhile, the pouch film stack may be manufactured through a method for manufacturing a pouch film stack known in the technical field. For example, the pouch film stack may be manufactured through a method of attaching the base layer 10 on the upper surface of the barrier layer 20 through an adhesive, and forming the sealant layer 30 on the lower surface of the barrier layer 20 through coextrusion or an adhesive, but is not limited thereto.

The pouch 100 is manufactured by inserting the pouch film stack into a molding device, and applying a pressure to a partial region of the pouch film stack with a punch to form a cup portion. In this case, the pressure may be 0.3 MPa to 1 MPa, preferably, 0.3 MPa to 0.8 MPa, and more preferably, 0.4 MPa to 0. 6 MPa. When the pressure in molding the cup portion is too low, a wrinkle may occur due to excessive drawing, and when the pressure is too high, drawing may not occur well, and a molding depth may be too small.

Meanwhile, a moving speed of the punch may be 20 mm/min to 80 mm/min, preferably, 30 mm/min to 70 mm/min, and more preferably, 40 mm/min to 60 mm/min. When the pressure in molding is too low, or the moving speed of the punch is too high, a wrinkle may occur due to buckling, and when the pressure in molding is too high, or the moving speed of the punch is too low, occurrence of a pinhole or a crack may increase due to a great strength concentrated in a corner of the cup portion in molding.

The pouch 100 manufactured through the method includes a lower case 101, an upper case 102, and a folded portion 130 connecting the lower case 101 and the upper case 102, and the lower case and the upper case includes the cup portion 110 having an indented shape in one direction.

Specifically, as illustrated in FIG. 2, the pouch 100 may have a one-cup form in which the cup portion 110 is formed only in the lower case 101, but is not limited thereto, and the pouch 100 may have a two-cup form in which the cup portion 110 is formed on both the lower case and the upper case. When the pouch 100 has the two-cup form, since after the electrode assembly and the electrolyte are accommodated, the upper case is folded such that the cup portion of the upper case and the cup portion of the lower case face each other, the pouch 100 having the two-cup form may accommodate a thicker electrode assembly than the pouch 100 having the one-cup form, and thus the pouch 100 having the two-cup form has an advantage of performing a higher energy density.

The cup portion 110 has a space for accommodating an electrode assembly 200. Meanwhile, the pouch 100 may include a terrace 120 around the cup portion 110. The terrace 120 means a region not molded in the pouch film stack, that is, a region except for the cup portion 110. The terrace 120 is a portion sealed through thermal adhesion in a process of sealing after accommodating the electrode assembly 200 in the cup portion 110 and injecting the electrolyte.

The cup portion 110 may include a bottom surface and a circumferential surface. The circumferential surface may connect the bottom surface and the terrace 120. The circumferential surface may be provided in plurality, and more particularly, in four. The bottom surface may cover one surface of the electrode assembly 200, and the circumferential surface may surround the circumference of the electrode assembly 200.

Meanwhile, the folded portion 130 may connect the lower case 101 and the upper case 102, may accommodate the electrode assembly 200 in the cup portion 110, and may be folded after injecting the electrolyte to have the upper case 102 seal the cup portion 110 of the lower case 101. Since when the folded portion 130 is included, the lower case 101 and the upper case 102 is integrally connected, when a sealing process is performed later, the number of sides to be sealed may decrease so that there is an effect of improving processability.

The folded portion 130 is formed spaced apart from the cup portion 110, and a distance between the folded portion 130 and the cup portion 110 may be 0.5 mm to 3 mm, and preferably, 0.5 mm to 2 mm. When the folded portion 130 and the cup portion 110 are formed too near, folding may not be smoothly performed, and when the folded portion 130 and the cup portion 110 are formed too far, the total volume of the secondary battery may increase, thereby reducing the energy density relative to the volume. When the pouch 100 has a two-cup case, the folded portion may be formed so as to satisfy the distance with respect to each cup portion.

A battery cell may be manufactured by sealing the sealant layer by heating after the electrode assembly 200 is disposed in the cup portion 110 of the pouch, and the pouch is folded so that the lower case 101 and the upper case 102 are in contact with each other. In this case, a separate gas pocket space may be formed in the terrace 120.

In this case, the electrode assembly 200 may include a plurality of electrodes and a plurality of separators alternately stacked. The plurality of electrodes may be alternately stacked with a separator therebetween, and may include a positive electrode and a negative electrode having opposite polarities.

Referring to FIG. 2, the electrode assembly 200 may be provided with a plurality of electrode tabs 230 welded to each other. The plurality of electrode tabs 230 may be respectively connected to a plurality of electrodes, and may protrude from the electrode assembly 200 to the outside to function as a path through which an electron may move between the inside and the outside of the electrode assembly 200. The plurality of electrode tabs 230 may be disposed inside the pouch 100.

The electrode tab 230 connected to the positive electrode and the electrode tab 230 connected to the negative electrode may protrude in different directions of the electrode assembly 200. However, an embodiment of the present invention is not limited thereto, and the electrode tab 230 connected to the positive electrode and the electrode tab 230 connected to the negative electrode may protrude side by side in the same direction.

A lead 240 that supplies electricity to the outside of the secondary battery may be connected to the plurality of electrode tabs 230 by spot welding, laser welding, ultrasonic welding, or the like. One end of the lead 240 may be connected to the plurality of electrode tabs 230, and the other end of the lead 240 may protrude to the outside of the pouch 100.

The lead 240 may be partially surrounded by the insulating portion 250. For example, the insulating portion 250 may include an insulating tape. The insulating portion 250 may be placed between the terrace 120 of the first case 101 and the second case 102, and in the state, the terrace 120 and the second case 102 may be heat-fused. In this case, the terrace 120 and a portion of the second case 102 may be heat-fused with the insulating portion 250. Accordingly, the insulating portion 250 may prevent electricity generated by the electrode assembly 200 from flowing to the pouch 100 through the lead 240, and may maintain sealing of the pouch 100.

Meanwhile, according to the present invention, the electrode assembly 200 may have a ratio of a full length W1 to a full width length W2 of 3 to 12, and preferably, 5 to 10. When the ratio of the full length to the full width length satisfies the range, an effect of performing a high energy density in a finite space may be obtained. Here, the full length and the full width length may respectively mean the maximum extended lengths of the electrode assembly in the longitudinal direction and the width direction on a plane.

For example, the electrode assembly may have the full length of 400 mm to 600 mm, and the full width length of 50 mm to 140 mm, and preferably, the full length of 450 mm to 550 mm and the full width length of 60 mm to 130 mm. When the full length and the full width length of the electrode assembly satisfy the specific range, a frictional force may be additionally increase without increasing an amount of the electrolyte. Here, the full length and the full width length may respectively mean the maximum extended lengths of the electrode assembly in the longitudinal direction and the width direction on a plane.

Meanwhile, the electrode assembly may have a weight of 500 g to 1500 g, preferably, 550 g to 1450 g, and more preferably, 600 g to 1400 g. When the weight of the electrode assembly satisfies the range, high capacity may be performed, and the frictional force between the electrode assembly and the inner surface of the battery case may increase so that impact-resistance may become excellent.

Meanwhile, at least one fixing member that wraps and fixes the electrode assembly in the full width direction may be further included on the outer surface of the electrode assembly. In a case of the electrode assembly (for convenience, called as a long-cell) having a rectangular form in which the full length is longer than the full width, the fixing member that wraps and fixes the electrode assembly in the full width direction may be used so as to maintain alignment of components of the electrode assembly 200, that is, the positive electrode, the negative electrode, and the separator.

The fixing member may include a porous structure. When the fixing member includes the porous structure, the electrolyte may pass through the fixing member and be impregnated into the electrode assembly, thereby preventing the electrolyte impregnability of the electrode assembly from being deteriorated due to the fixing member. Specifically, the fixing member may be a finishing tape, having a porous structure, in which an adhesive layer is formed on one surface of the base layer of a polymer material, but is not limited thereto. The polymer material may be, for example, polyethyleneterephthalate (PET), polyvinylchloride (PVC), polyethylene (PE), or the like, but is not limited thereto.

It is preferable that the fixing member has a width in the width direction of the electrode assembly of 10 mm to 50 mm, and preferably, 20 mm to 40 mm. When the width of the fixing member is too wide, an area of the outer surface of the electrode assembly covered by the fixing member may increase so that a contact area with the electrolyte may decrease and electrolyte impregnability may be deteriorated, and the frictional force between the electrode assembly and the battery case may decrease so that impact-resistance may be deteriorated. Meanwhile, when the width of the fixing member is too narrow, an effect of fixing the electrode assembly may be deteriorated.

Meanwhile, the number of the fixing members disposed on the outer surface of the electrode assembly may be 2 to 10, preferably, 2 to 8, and more preferably, 3 to 7. The fixing members may be disposed in left and right symmetrical positions along the full length direction, and preferably, may be disposed spaced apart from each other at equal intervals. When the fixing members are provided in plurality and disposed in the above manner, the electrode assembly having the long full length and the long-cell structure may be robustly fixed.

Meanwhile, the contact area of the fixing member and the electrode assembly may be 30% or less, preferably, 25% or less, and more preferably, 20% or less of the total surface area of the electrode assembly. Specifically, the contact area of the fixing member and the electrode assembly may be 0 to 30%, 1% to 30%, 5% to 30%, 5% to 25%, or 5% to 20% of the total surface area of the electrode assembly.

The contact area of the fixing member and the electrode assembly may be controlled by controlling the width of the used fixing member or the number of the used fixing members. Since the fixing member generally used is made of a material having a smaller frictional coefficient than the separator disposed on the outermost surface of the electrode assembly, when the area of the fixing member surrounding the electrode assembly increases, the frictional force between the electrode assembly and the battery case may be deteriorated. Accordingly, it is desirable that when the fixing member is used, a decrease in the frictional force is suppressed by keeping the contact area between the electrode assembly and the battery case to 30% or less.

Next, the electrolyte is for moving lithium ions generated by an electrochemical reaction of an electrode during charging and discharging of the secondary battery, and may include an organic solvent and a lithium salt.

As long as serving as a medium through which ions involved in the electrochemical reaction of the battery may move, the organic solvent may be used without special limitation. Specifically, an ester solvent such as methylacetate, ethylacetate, γ-butyrolactone, and ε-caprolactone, an ether-based solvent such as dibutylether or tetrahydrofuran, a ketone-based solvent such as cyclohexanone, an aromatic hydrocarbon-based solvent such as benzene and fluorobenzene, a carbonate-based solvent such as dimethylcarbonate (DMC), diethylcarbonate (DEC), methylethylcarbonate (MEC), ethylmethylcarbonate (EMC), ethylenecarbonate (EC), propylenecarbonate (PC), an alcohol-based solvent such as ethylalcohol and isopropylalcohol, a nitrile such as R-CN (R is a C2 to C20 straight-chain, branched, or ring-structured hydrocarbon group, and may include a double bond aromatic ring or ether bond), an amide such as dimethylformamide, a dioxolane such as 1,3-dioxolane, a sulfolane, or the like may be used as the organic solvent. The carbonate-based solvent is preferable thereamong, and a mixture of a cyclic carbonate-based compound (for example, ethylenecarbonate, propylenecarbonate, or the like) having a high ionic conductivity and a high dielectric constant capable of improving a charging and discharging performance of the battery, and a linear carbonate-based compound (for example, ethylmethylcarbonate, dimethylcarbonate, diethylcarbonate, or the like) is more preferable.

As long as being a compound capable of supplying lithium ions used in the lithium secondary battery, the lithium salt may be used without special limitation. Specifically, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt at a concentration having a range of 0.1 M to 5.0 M, and preferably, 0.1 M to 3.0 M. Since when the lithium salt satisfies the concentration having the range, the electrolyte has appropriate conductivity and viscosity, the electrolyte may exhibit excellent performances, and the lithium ions may effectively move.

As well as the components of the electrolyte, the electrolyte may additionally include an additive on the purpose of improvement of life characteristics of the battery, suppression of decrease in a battery capacity, improvement of a discharging capacity of the battery, etc.

Meanwhile, the electrolyte according to the present invention may be injected such that an amount of the electrolyte per unit capacity of the secondary battery is 2.0 g/Ah to 2.5 g/Ah, preferably, 2.1 g/Ah to 2.4 g/Ah, and more preferably, 2.1 g/Ah to 2.3 g/Ah. The amount of the electrolyte per unit capacity means a ratio of an injection amount of the secondary electrolyte (unit: g) to a rated capacity of the secondary battery (unit: Ah). The rated capacity of the secondary battery means an electrical capacity developed when a fully charged battery is continuously discharged at 0.33 C and reaches the discharge end voltage. In this case, the fully-charged voltage (the charge end voltage) and the discharge end voltage may be appropriately selected according to the type of the secondary battery. For example, when the secondary battery is an NCM cell, the rated capacity may be a discharge capacity of the time when the secondary battery is charged up to 4.25 V and discharged to 2.5 V at 0.33 C. The unit capacity means 1 Ah.

When the amount of the electrolyte per unit capacity satisfies the range, excellent impact-resistance may be performed without deterioration of an electrochemical property of the secondary battery. When the amount of the electrolyte is too small, a battery performance may be deteriorated due to insufficient electrolyte during battery operation, and when the amount of the electrolyte is too large, an effect of improving the impact-resistance is minimal. Meanwhile, according to the present invention, the secondary battery may have the rated capacity of 50 Ah to 200 Ah, preferably, 50 Ah to 150 Ah, and more preferably, 60 Ah to 140 Ah.

Meanwhile, after the battery cell is manufactured, an activation process may be performed (S2).

The activation process is for activating the battery cell to impart electrical characteristics, and for stabilizing the electrode and the electrolyte, and may be performed through a general activation method well known in the technical field. For example, the activation process may be performed by a method of charging and discharging the battery cell, and may include an aging process and/or degassing process as needed.

The charging and discharging process is for imparting the electrical characteristics by charging and discharging the battery cell, and for forming a solid electrolyte interphase (SEI) film on an electrode surface, and the charging and discharging conditions may be appropriately controlled according to the positive electrode, the negative electrode, and an electrolyte composition of the battery cell. For example, in a case of a battery in which a lithium-nickel-cobalt-manganese oxide is applied as a positive electrode active material, and graphite is applied as a negative electrode active material, the charging and discharging may be performed at 20°C to 60°C in a voltage range of 2.0 V to 4.4 V.

Meanwhile, the aging process is for evenly distributing the injected electrolyte inside the cell and well penetrating the injected electrolyte into the positive electrode and the negative electrode, and is performed by a method of storing the battery cell at specific temperature and humidity for a specific period of time. For example, the aging process may be performed at 10°C to 70°C for 0 to 72 hours, but is not limited thereto.

Meanwhile, a sequence and the number of times in which the charging and discharging process and the aging process are performed are not specially limited, and may be appropriately controlled as needed. For example, the charging and discharging process and the aging process may be each independently performed at least once, and the aging may be performed before and/or after the charging and discharging process.

The degassing process is for removing gas inside the battery cell. When the electrolyte and the electrode chemically react in the aging process and the charging and discharging process, the gas occurs. When the gas remains inside the battery cell, an electrochemical performance, or the like may be deteriorated, and thus it is desirable to emit the gas inside the battery cell. General methods used in the technical field may be used as the degassing process without limitation, and the degassing process is not specially limited. For example, the degassing process may be performed by a method of sealing a gas outlet through heat-fusion, or the like after forming a gas outlet on a partial region of the pouch, and emitting the gas from a decompression chamber, a method of cutting and removing a gas pocket after forming the gas pocket on a partial region of the pouch and moving the gas into the gas pocket through compression, or the like.

### Second step: pre-cycle step

Next, pre-cycle is performed at least three times for the battery cell manufactured by the method.

According to research of the inventors of the present invention, when the pre-cycle is performed at least three times, the frictional force between the electrode assembly and the battery case significantly increases, and thus impact-resistance is remarkably improved by suppressing separation of the electrode assembly when an external impact occurs. When the pre-cycle is performed twice or less, an effect of improving the impact-resistance is minimal due to a small increase in the frictional force. However, when the pre-cyle is performed too many times, an electrochemical property may be deteriorated due to a consumption increase in the active material and the electrolyte, and it is preferable to perform the pre-cycle 10 times or less, and preferably, 7 times or less.

The pre-cycle may be performed in a voltage range of 2.50 V to 4.35 V. When the pre-cycle is performed out of the range, voltage performance deterioration may be caused by overcharging or overdischarging.

Meanwhile, the pre-cycle may be performed at a C-rate of 0.1 C to 1 C, and preferably, 0.1 C to 0.5 C in a SOC range of 0 to 100, preferably, 0 to 99, and more preferably, 0 to 98.5. When a current speed in the pre-cycle is too high, a degradation reaction of the battery may be accelerated to deteriorate the battery performance, and when the SOC range is too narrow, an effect of increasing the frictional force may be minimal due to insufficient breathing of the battery.

The lithium secondary battery according to the present invention manufactured through at least three times of the pre-cycle exhibits a higher frictional force between the electrode assembly and the bottom surface of the cup portion than a typical one.

Specifically, the lithium secondary battery according to the present invention may include a battery case, and the electrode assembly and the electrolyte accommodated in the battery case, and may have a frictional force between the battery case and the electrode assembly of at least 21 kgf, and preferably, 21 kgf to 31 kgf. In this case, details of the battery case, the electrode assembly, and the electrolyte are the same as what is described above, and thus specific description thereof is omitted.

The frictional force between the electrode assembly and the battery case is measured in the following method.

The frictional force between the electrode assembly and the battery case is evaluated by measuring a force applied while pulling at a speed of 100 mm/min after partially cutting the battery case (pouch) of the secondary battery, cutting a welded portion of a negative electrode lead and an electrode assembly, and connecting a positive electrode tab to a universal testing machine (UTM).

Since as described above, the lithium secondary battery according to the present invention has a high frictional force between the electrode assembly and the inner surface of the battery case, pouch damage is minimized due to small separation of the electrode assembly by an external impact, and thus the lithium secondary battery has a very excellent impact-resistance. Specifically, when a crash shock test is performed under a condition having an acceleration of 133.7 G, and a holding time of 15.8 ms, the lithium secondary battery according to the present invention may have a leak amount of the electrolyte of 0.

The crash shock test may be performed by a method of determining whether or not the battery is damaged after attaching a cell to be measured to a jig of a drop shock apparatus and then letting the cell freely fall from a specific height in the direction of the electrode tab. In this case, a free fall height is set considering a crash condition (acceleration x holding time) to be measured. Specifically, the free fall height may be set by converting an impact energy in the collision condition to be measured into a potential energy, and calculating the height capable of having the converted potential energy by considering the weight of the battery to be measured. Meanwhile, whether or not the battery is damaged may be evaluated by whether or not the electrolyte is leaked.

### [Mode for carrying out invention]

### Example 1

A pouch in which nylon/polyethyleneterephthalate/an Al alloy thin-film/polypropylene were sequentially stacked, and a cup portion was molded was prepared. A battery cell was manufactured by accommodating, in the cup portion, a stack-type electrode assembly having a full length of 548 mm and a full width of 99 mm, injecting electrolyte such that an amount of the electrolyte per unit capacity is 2.3 g/Ah, and then performing a sealing. Next, the battery cell was charged and discharged in a temperature range of 10°C to 70°C in a voltage range of 2.0 V to 4.25 V, and then was activated by performing a degassing process.

Subsequently, a pouch-type lithium secondary battery was manufactured by performing, three times, a pre-cycle process of charging the activated battery cell up to 4.25 V at 0.33 C in a SOC region of 0 to 100, and discharging to 2.5 V at 0.33 C.

### Example 2

A pouch-type lithium secondary battery was manufactured in the same method as Example 1 except that the electrolyte was injected such that the amount of the electrolyte per unit capacity is 2.2 g/Ah,

### Comparative Example 1

A pouch-type lithium secondary battery was manufactured in the same method as Example 1 except that the pre-cycle was not performed.

### Comparative Example 2

A pouch-type lithium secondary battery was manufactured in the same method as Example 1 except that the pre-cycle was performed once.

### Comparative Example 3

A pouch-type lithium secondary battery was manufactured in the same method as Example 1 except that the pre-cycle was performed twice.

### Experimental Example 1: Frictional force test

The frictional force between the electrode assembly and the inner surface of the battery case (the bottom surface of the cup portion) was evaluated by measuring a force applied while pulling at a speed of 100 mm/min after partially cutting the pouch of the lithium secondary battery manufactured by Examples 1 and 2, and Comparative Examples 1 to 3, cutting a welded portion of a negative electrode lead and an electrode assembly, and connecting a positive electrode tab to a universal testing machine (UTM). In this case, the frictional force is an average value of the frictional forces respectively measured for three secondary batteries manufactured by each of Examples and Comparative Examples. The measured results are shown in Table 1 below.

### Experimental Example 2: Crash shock test

A crash shock test was performed on the pouch-type lithium secondary batteries manufactured in Examples 1 and 2 and Comparative Examples 1 to 3 under the conditions of an acceleration of 133.7 G and a holding time of 15.8 ms. The measurement result was shown in Table 1 below. A case in which electrolyte leak and separation of the electrode assembly did not occur is represented as 'Pass', and a case in which the electrolyte leak and/or the separation of the electrode assembly occurred is represented as 'Fail'.

**[Table 1]**

| | Frictional force (unit: kgf) | Crash shock test result |
|---|---|---|
| Example 1 | 23.3 | Pass |
| Example 2 | 24.3 | Pass |
| Comparative Example 1 | 13.0 | Fail |
| Comparative Example 2 | 14.3 | Fail |
| Comparative Example 3 | 20.7 | Fail |

As shown in Table 1, the secondary batteries of Example 1 and 2 in which the pre-cycle was performed at least three times show great frictional forces between the electrode assembly and the battery case, thereby showing excellent impact-resistance by suppressing separation of the electrode assembly due to an external impact. On the contrary, the secondary batteries of Comparative Examples 1 to 3 in which the pre-cycle was not performed or the pre-cycle was performed twice or less, show lower frictional forces between the electrode assembly and the battery case than the batteries of Examples, so that electrolyte leak occurred during the crash shock test.

## Claims

1. A method for manufacturing a lithium secondary battery, the method comprising:
a first step of manufacturing a battery cell by disposing an electrode assembly in a battery case, and injecting electrolyte; and
a second step of performing a pre-cycle for the battery cell at least three times in a voltage range of 2.50 V to 4.35 V.

2. The method of claim 1, wherein the battery case comprises a barrier layer, a base layer formed on one surface of the barrier layer, and a sealant layer formed on the other surface of the barrier layer, and is a pouch including at least one cup portion indented in one direction.

3. The method of claim 1, wherein in the first step, the electrolyte is injected such that an amount of the electrolyte per unit capacity of the secondary battery is 2.0 g/Ah to 2.5 g/Ah.

4. The method of claim 1, wherein in the first step, the electrolyte is injected such that an amount of the electrolyte per unit capacity of the secondary battery is 2.1 g/Ah to 2.4 g/Ah.

5. The method of claim 1, wherein in the second step, the pre-cycle is performed at a C-rate of 0.1 C to 1 C in a SOC region of 0 to 100.

6. The method of claim 1, wherein in the second step, the pre-cycle is performed 3 times to 7 times.

7. The method of claim 1, wherein an activation process is additionally performed between the first step and the second step.

8. A lithium secondary battery comprising a battery case, and an electrode assembly and electrolyte accommodated in the battery case,
wherein a frictional force between the inner surface of the battery case and the electrode assembly is at least 21 kgf.

9. The lithium secondary battery of claim 8, wherein the battery case comprises a barrier layer, a base layer formed on one surface of the barrier layer, and a sealant layer formed on the other surface of the barrier layer, and is a pouch including at least one cup portion indented in one direction.

10. The lithium secondary battery of claim 9, wherein a frictional force between a bottom surface of the cup portion and the electrode assembly is 21 kgf to 31 kgf.

11. The lithium secondary battery of claim 8, wherein when a crash shock test is performed under conditions of an acceleration of 133.7 G and a holding time of 15.8 ms, an amount of electrolyte leak of the lithium secondary battery is 0.

12. The lithium secondary battery of claim 8, wherein the electrode assembly has a ratio of a full length to a full width of 3 to 12.

13. The lithium secondary battery of claim 8, wherein the electrode assembly has a full length of 400 mm to 600 mm, and a full width of 50 mm to 140 mm.

14. The lithium secondary battery of claim 8, wherein the lithium secondary battery has a rated capacity of 50 Ah to 200 Ah.
